# EUROPEAN PATENT SPECIFICATION

(11) **EP 4 483 278 B1**
(45) Date of publication and mention of the grant of the patent: **27.05.2026**
(21) Application number: 23704946.5
(22) Date of filing: 10.02.2023
(51) Int. Cl.: G06F 21/14, G06F 21/55, G06N 20/00

(54) **A METHOD TO PREVENT CAPTURING OF AN AI MODULE AND AN AI SYSTEM THEREOF**
VERFAHREN ZUR VERHINDERUNG DER ERFASSUNG EINES KI-MODULS UND KI-SYSTEM DAFÜR
PROCÉDÉ POUR EMPÊCHER LA CAPTURE D'UN MODULE D'IA ET SYSTÈME D'IA ASSOCIÉ

(30) Priority: 25.02.2022 IN 202241010164
(43) Date of publication of application: 01.01.2025
(73) Proprietor: Robert Bosch GmbH, 70442 Stuttgart (DE); Robert Bosch Engineering And Business Solutions Limited, Bangalore 560 095 State of Karnataka (IN)
(72) Inventor: PARMAR, Manojkumar Somabhai, Maninangar Ahmedabad, Gujarat 38008 (IN)
(74) Representative: Bee, Joachim
(86) International application number: PCT/EP2023/053355
(87) International publication number: WO 2023/161044

(56) References cited:
- WO-A1-2022/029753
- HARDER PAULA ET AL: "SpectralDefense: Detecting Adversarial Attacks on CNNs in the Fourier Domain", 2021 INTERNATIONAL JOINT CONFERENCE ON NEURAL NETWORKS (IJCNN), IEEE, 18 July 2021 (2021-07-18), pages 1 - 8, XP033974557, DOI: 10.1109/IJCNN52387.2021.9533442
- AMIR MAHDI SADEGHZADEH ET AL: "Hardness of Samples Is All You Need: Protecting Deep Learning Models Using Hardness of Samples", ARXIV.ORG, CORNELL UNIVERSITY LIBRARY, 201 OLIN LIBRARY CORNELL UNIVERSITY ITHACA, NY 14853, 21 June 2021 (2021-06-21), XP081993083
- YI ZENG ET AL: "Rethinking the Backdoor Attacks' Triggers: A Frequency Perspective", ARXIV.ORG, CORNELL UNIVERSITY LIBRARY, 201 OLIN LIBRARY CORNELL UNIVERSITY ITHACA, NY 14853, 7 April 2021 (2021-04-07), XP091124282

## Description

### Field of the invention

The present disclosure relates to a method to prevent capturing of an AI module and an AI system thereof.

### Background of the invention

With the advent of data science, data processing and decision making systems are implemented using artificial intelligence modules. The artificial intelligence modules use different techniques like machine learning, neural networks, deep learning etc. Most of the AI based systems, receive large amounts of data and process the data to train AI models. Trained AI models generate output based on the use cases requested by the user. Typically the AI systems are used in the fields of computer vision, speech recognition, natural language processing, audio recognition, healthcare, autonomous driving, manufacturing, robotics etc. where they process data to generate required output based on certain rules/intelligence acquired through training.

To process the inputs and give a desired output, the AI systems use various models/algorithms which are trained using the training data. Once the AI system is trained using the training data, the AI systems use the models to analyze the real time data and generate appropriate result. The models may be fine-tuned in real-time based on the results. The models in the AI systems form the core of the system. Lots of effort, resources (tangible and intangible), and knowledge goes into developing these models.

It is possible that some adversary may try to capture/copy/extract the model from AI systems. The adversary may use different techniques to capture the model from the AI systems. One of the simple techniques used by the adversaries is where the adversary sends different queries to the AI system iteratively, using its own test data. The test data may be designed in a way to extract internal information about the working of the models in the AI system. The adversary uses the generated results to train its own models. By doing these steps iteratively, it is possible to capture the internals of the model and a parallel model can be built using similar logic. This will cause hardships to the original developer of the AI systems. The hardships may be in the form of business disadvantages, loss of confidential information, loss of lead time spent in development, loss of intellectual properties, loss of future revenues etc.

There are methods known in the prior arts to identify such attacks by the adversaries and to protect the models used in the AI system. The prior art US 20190095629A1- Protecting Cognitive Systems from Model Stealing Attacks discloses one such method. It discloses a method wherein the input data is processed by applying a trained model to the input data to generate an output vector having values for each of the plurality of pre-defined classes. A query engine modifies the output vector by inserting a query in a function associated with generating the output vector, to thereby generate a modified output vector. The modified output vector is then output. The query engine modifies one or more values to disguise the trained configuration of the trained model logic while maintaining accuracy of classification of the input data. Other relevant prior arts include WO 2022/029753; HARDER PAULA ET AL : "SpectralDefense: Detecting Adverserial Attacks on CNNs in the fourier domain"; AMIR MAHDI SADEGHZADEH ET AL:"Hardness of samples is all you need : Protecting Deep learning models using hardness of samples", YI ZENG ET AL:"Rethinking the Backdoor Attacks' Triggers: A frequency perspective".

### Brief description of the accompanying drawings

An embodiment of the invention is described with reference to the following accompanying drawings:
Figure 1 depicts an AI system (10);

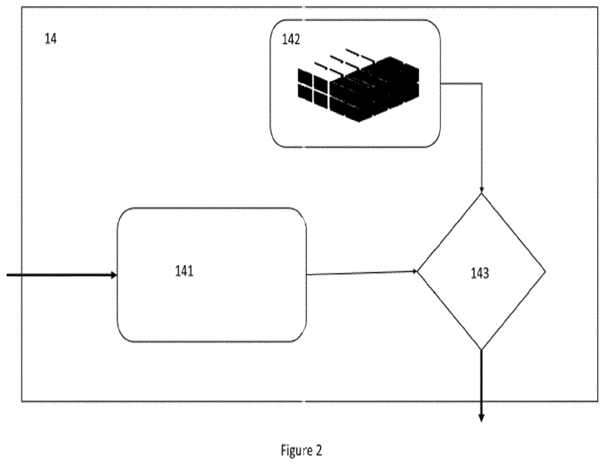

Figure 2 depicts a submodule with the AI system (10);
Figure 3 illustrates method steps of (200) of training a submodule (14) in an AI system (10);
Figure 4 illustrates method steps (300) to prevent capturing of an AI module (12) in the AI system (10).

### Detailed description of the drawings

It is important to understand some aspects of artificial intelligence (AI) technology and artificial intelligence (AI) based systems or artificial intelligence (AI) system. This disclosure covers two aspects of AI systems. The first aspect is related to the training of a submodule in the AI system and second aspect is related to the prevention of capturing of the AI module in an AI system.

Some important aspects of the AI technology and AI systems can be explained as follows. Depending on the architecture of the implements AI systems may include many components. One such component is an AI module. An AI module with reference to this disclosure can be explained as a component which runs a model. A model can be defined as reference or an inference set of data, which is use different forms of correlation matrices. Using these models and the data from these models, correlations can be established between different types of data to arrive at some logical understanding of the data. A person skilled in the art would be aware of the different types of AI models such as linear regression, naive bayes classifier, support vector machine, neural networks and the like. It must be understood that this disclosure is not specific to the type of model being executed in the AI module and can be applied to any AI module irrespective of the AI model being executed. A person skilled in the art will also appreciate that the AI module may be implemented as a set of software instructions, combination of software and hardware or any combination of the same.

Some of the typical tasks performed by AI systems are classification, clustering, regression etc. Majority of classification tasks depend upon labeled datasets; that is, the data sets are labelled manually in order for a neural network to learn the correlation between labels and data. This is known as supervised learning. Some of the typical applications of classifications are: face recognition, object identification, gesture recognition, voice recognition etc. Clustering or grouping is the detection of similarities in the inputs. The cluster learning techniques do not require labels to detect similarities. Learning without labels is called unsupervised learning. Unlabeled data is the majority of data in the world. One law of machine learning is: the more data an algorithm can train on, the more accurate it will be. Therefore, unsupervised learning models/algorithms has the potential to produce accurate models as training dataset size grows.

As the AI module forms the core of the AI system, the module needs to be protected against attacks. Attackers attempt to attack the model within the AI module and steal information from the AI module. The attack is initiated through an attack vector. In the computing technology a vector may be defined as a method in which a malicious code/virus data uses to propagate itself such as to infect a computer, a computer system or a computer network. Similarly, an attack vector is defined a path or means by which a hacker can gain access to a computer or a network in order to deliver a payload or a malicious outcome. A model stealing attack uses a kind of attack vector that can make a digital twin/replica/copy of an AI module.

The attacker typically generates random queries of the size and shape of the input specifications and starts querying the model with these arbitrary queries. This querying produces input-output pairs for random queries and generates a secondary dataset that is inferred from the pre-trained model. The attacker then take this I/O pairs and trains the new model from scratch using this secondary dataset. This is black box model attack vector where no prior knowledge of original model is required. As the prior information regarding model is available and increasing, attacker moves towards more intelligent attacks. The attacker chooses relevant dataset at his disposal to extract model more efficiently. This is domain intelligence model-based attack vector. With these approaches, it is possible to demonstrate model stealing attack across different models and datasets.

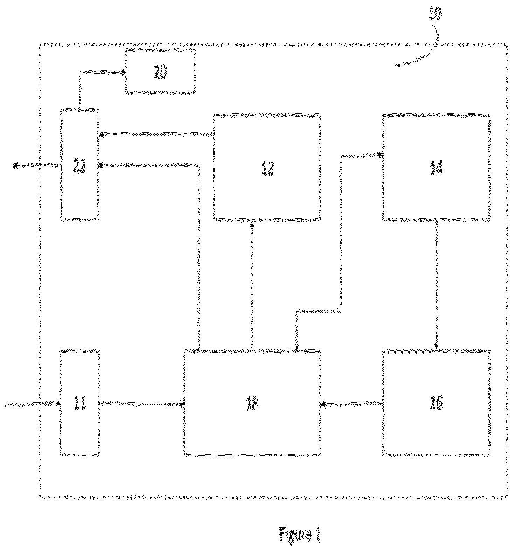

Figure 1 depicts an AI system (10). The AI system (10) comprises an input interface (11), a blocker module (18), an AI module (12), a submodule (14), a blocker notification module (20), an information gain module (16) and at least an output interface (22). The input interface (11) receives input data from at least one user. The input interface (11) is a hardware interface wherein a user can enter his query for the AI module (12).

A module with respect to this disclosure can either be a logic circuitry or a software programs that respond to and processes logical instructions to get a meaningful result. A module is implemented as any or a combination of: one or more microchips or integrated circuits interconnected using a parent board, hardwired logic, software stored by a memory device and executed by a microprocessor, microcontrollers, firmware, an application specific integrated circuit (ASIC), and/or a field programmable gate array (FPGA). As explained above, these various modules can either be a software embedded in a single chip or a combination of software and hardware where each module and its functionality is executed by separate independent chips connected to each other to function as the system. For example, a neural network (in an embodiment the AI module) mentioned herein after can be a software residing in the system or the cloud or embodied within an electronic chip. Such neural network chips are specialized silicon chips, which incorporate AI technology and are used for machine learning.

The blocker module (18) is configured to block a user when the information gain exceeds a predefined threshold. Information gain is calculated based on input attack queries exceeds a predefined threshold value. The blocker module (18) is further configured to modify a first output generated by an AI module (12). This is done only when the input is identified as an attack vector.

The AI module (12) to process said input data and generate the first output data corresponding to said input. The AI module (12) executes a first model (M) based on the input to generate a first output. The first model could be any one from those mentioned above such as linear regression, naive bayes classifier, support vector machine or neural networks and the like.

The submodule (14) is configured to identify an attack vector from the received input. The submodule comprises a computation module (141), a memory (142) and at least a comparator module (143). The computation module (141) is configured to at least derive an instantaneous frequency domain transformation signature of the received input. The memory (142) is configured to store a set of pre-derived frequency domain transformation signatures. The set of pre-derived Frequency domain transformation signatures comprise Frequency domain transformation signatures for known inputs comprising a range of non-attack vectors.

The comparator module (143) is configured to compare the instantaneous Frequency domain transformation signature with the set of pre-derived frequency domain transformation signatures. The comparator module (143) can be a conventional electronic comparator or specialized electronic comparator either embedded with neural networks or executing another AI model to enhance their functions. The above-mentioned components of the submodule can either be implemented in a single chip or as any or a combination of: one or more microchips or integrated circuits interconnected using a parent board, hardwired logic, software stored by a memory device and executed by a microprocessor, firmware, an application specific integrated circuit (ASIC), and/or a field programmable gate array (FPGA).

The blocker notification module (20) transmits a notification to the owner of said AI system (10) on detecting an attack vector. The notification could be transmitted in any audio/visual/textual form.

The information gain module (16) is configured to calculate an information gain and send the information gain value to the blocker module (18). The information gain is calculated using the information gain methodology. In one embodiment, if the information gain extracted exceeds a pre-defined threshold, the AI system (10) is configured to lock out the user from the system. The locking out the system is initiated if the cumulative information gain extracted by plurality of users exceeds a pre-defined threshold.

The output interface (22) sends output to said at least one user. The output sent by the output interface (22) comprises the first output data when the submodule (14) doesn't identify an attack vector from the received input. The output sent by the output interface (22) comprises a modified output received from the blocker module (18), when an attack vector is detected from the input.

It should be understood at the outset that, although exemplary embodiments are illustrated in the figures and described below, the present disclosure should in no way be limited to the exemplary implementations and techniques illustrated in the drawings and described below. As explained above, these various modules and submodules can either be a software embedded in a single chip or a combination of software and hardware where each module and its functionality is executed by separate independent chips connected to each other to function as the system.

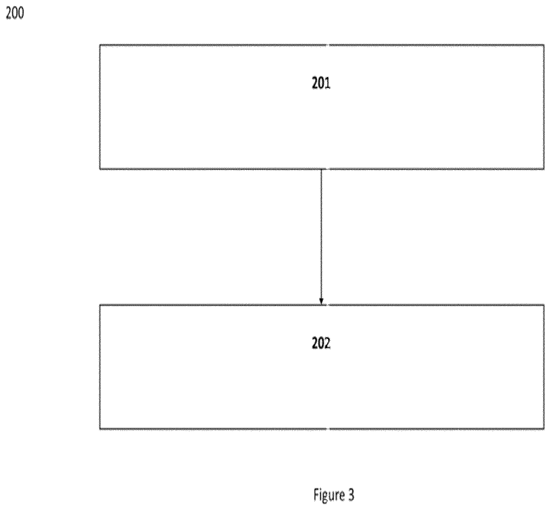

Figure 3 illustrates method steps of (200) of training a submodule (14) in an AI system (10). Both the submodule (14) and the AI system (10) have been described in accordance with figure 1. It is reiterated that said AI system (10) comprises at least an AI module (12), a dataset used to train the AI module (12). In method step 201 a frequency domain transformation on the dataset is computed to derive a set of pre-derived Frequency domain transformation signatures. The dataset here comprises a range of valid inputs which are not attack vectors. In an exemplary embodiment one of the frequency domain transformations that is computed is the Fast Fourier Transform (FFT). In method step 202, the set of pre-derived Frequency domain transformation signatures is stored in a memory of the submodule. The idea is that we can transform inputs in to frequency domains using FFT and then create aggregation of FFT (using various methods such as averaging method, other aggregation measures like median, inter quartile range, weighted average and the like) to represent all frequency components and its variations across the range of valid inputs.

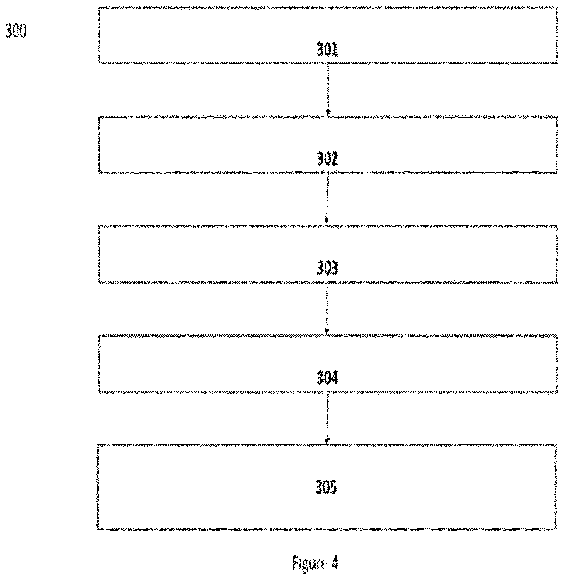

Figure 4 illustrates method steps (300) to prevent capturing of an AI module (12) in an AI system (10). The AI system (10) and its components have been explained in the preceding paragraphs by means of figures 1 and 3. A person skilled in the art will understand that the submodule (14) trained by the method steps (200) is now used in real time for preventing capture of an AI module (12) in an AI system (10).

In method step 301, input interface (11) receives input data from at least one user. In step 302, this input data is transmitted through a blocker module (18) to an AI module (12). In step 303, the AI module (12) computes a first output based on the input data.

In step 304, input is processed by submodule (14) to identify an attack vector from the input data, the identification information of the attack vector is sent to the information gain module (16). Processing of the input data further comprises computing an instantaneous Frequency domain transformation signature of the received input by means of a computational module. This is followed by comparing the instantaneous Frequency domain transformation signature with a set of pre-derived Frequency domain transformation signatures by means of a comparator module (143). Finally, identifying an attack vector based on said comparison. The set of pre-derived Frequency domain transformation signatures comprise Frequency domain transformation signatures for known inputs comprising a range of non-attack vectors.

Reference can be made to the training method (200) elucidated in accordance with figure 3. In an exemplary embodiment one of the frequency domain transformations that is computed is the Fast Fourier Transform (FFT). This method is based on information theory and machine learning concepts that train and test/predictable data should have minimum difference for assuring performance of models. The idea is that we can transform inputs into frequency domains using FFT and then create aggregation of FFT (using various methods such as averaging method, other aggregation measures like median, inter quartile range, weighted average and the like) to represent all frequency components and its variations across the inputs. First the FFT of training data is computed and aggregate in the memory of the submodule (14) as mentioned in the training method for the submodule. When the trained submodule (14) is deployed in the AI system (10), it calculates FFT for each queries (individually or in batch).Than we use the aggregated FFT signature and match FFT signature of queries. If the signature does not match with given threshold then the queries are rejected (individually or batch).This aggregation serves as a baseline to check if incoming input frequency signature is within the predefined aggregation limits. If input frequency signature generated using FFT is not within limits of aggregated frequency signature then it is considered as an attack vector.

In step 305 an output is sent to a user by means of the output interface (22). The output sent by the output interface (22) comprises the first output data when the submodule (14) doesn't identify an attack vector from the received input. Once the attack vector identification information is sent to the information gain module (16), an information gain is calculated. The information gain is sent to the blocker module (18). In an embodiment, if the information gain exceeds a pre-defined threshold, the user is blocked, and the notification is sent the owner of the AI system (10) using blocker notification module (20). If the information gain is below a pre-defined threshold, although an attack vector was detected, the blocker module (18) may modify the first output generated by the AI module (12) to send it to the output interface (22).

In addition, the user profile may be used to determine whether the user is habitual attacker or was it one time attack or was it only incidental attack etc. Depending upon the user profile, the steps for unlocking of the system may be determined. If it was first time attacker, the user may be locked out temporarily. If the attacker is habitual attacker, then a stricter locking steps may be suggested and so on.

A person skilled in the art will appreciate that while these method steps describe only a series of steps to accomplish the objectives, these methodologies may be implemented with slight modification to the AI system (10) described herein. This idea to develop a method to prevent capturing of an AI module (12) and an AI system (10) thereof is quite useful for time series inputs where time series can be sliced and FFT or other frequency domain transformations can be generated.

It must be understood that the embodiments explained in the above detailed description are only illustrative and do not limit the scope of this invention. Any modification to a method to prevent capturing of an AI module and an AI system thereof are envisaged and form a part of this invention. The scope of this invention is limited only by the claims.

## Claims

1. An AI system (10) to prevent capturing of an AI module, the AI system comprising at least:
- an input interface (11) configured to receive input from at least one user and an output interface (22) to send an output to said at least one user
- a blocker module (18) configured to block at least one user; the AI module (12) configured to process said input data and generate first output data corresponding to said input;
- an information gain module (16) configured to calculate an information gain and send the information gain value to the blocker module (18); a blocker notification module (20) configured to transmit a notification to an owner of said AI system (10) on detecting an attack vector and to modify the first output data generated by the AI module (12);
the AI system **characterized by**
a submodule (14) configured to identify an attack vector from the received input, wherein the submodule comprises ;
a computation module (141) configured to at least derive an instantaneous Frequency domain transformation signature of the received input;
a memory configured to store a set of pre-derived Fourier transform signatures, the set of pre-derived Frequency domain transformation signatures comprises aggregated Frequency domain transformation signatures for known inputs comprising a range of non-attack vectors, said aggregated frequency domain transformation signatures representing frequency variation across the range of non-attack vectors;
a comparator module (143) configured to compare the instantaneous Frequency domain transformation signature with the set of pre-derived frequency domain transformation signatures and to identify an attack vector based on said comparison based on a pre-defined threshold for comparison.

2. The AI system (10) as claimed in claim 1, where the output sent by the output interface (22) comprises the first output data when the submodule (14) doesn't identify an attack vector from the received input.

3. A method (200) of training a submodule (14) in an AI system (10), said AI system (10) comprising at least an AI module (12), a dataset used to train the AI module (12) , said method comprising the following steps:
- Computing Frequency domain transformation on the dataset to derive a set of pre-derived Frequency domain transformation signatures, wherein, the set of pre-derived Frequency domain transformation signatures comprises aggregated Frequency domain transformation signatures for known inputs comprising a range of non-attack vectors, said aggregated frequency domain transformation signatures representing frequency variations across the range of non-attack vectors;
- storing the set of pre-derived Frequency domain transformation signatures in a memory of the submodule.

4. A method (300) to prevent capturing of an AI module (12) in an AI system (10), said method comprising the following steps:
- receiving input data from at least one user through an input interface (11); transmitting input data through a blocker module (18) to an AI module (12); computing a first output data by the AI module (12) based on the input data;
processing input data by a submodule (14) to identify an attack vector from the input data, the identification information of the attack vector is sent to aninformation gain module (16);
- transmitting a notification to an owner of said AI system (10) on identifying an attack vector and modifying the first output data generated by the AI module; sending an output by means of the output interface (22) to prevent capturing of the AI module (12), the method **characterized by**, processing the input data by:
- computing an instantaneous Frequency domain transformation signature of the received input;
- comparing the instantaneous Frequency domain transformation signature with a set of pre-derived Frequency domain transformation signatures, wherein, the set of pre-derived Frequency domain transformation signatures comprises aggregated Frequency domain transformation signatures for known inputs comprising a range of non-attack vectors, said aggregated frequency domain transformation signatures representing frequency variations across the range of non-attack vectors;
- identifying an attack vector based on said comparison based on a pre-defined threshold for comparison.

## Patentansprüche

1. KI-System (10) zum Verhindern einer Erfassung eines KI-Moduls, wobei das KI-System mindestens Folgendes umfasst:
- eine Eingabeschnittstelle (11), die dazu konfiguriert ist, eine Eingabe von mindestens einem Benutzer zu empfangen, und eine Ausgabeschnittstelle (22), um eine Ausgabe an den mindestens einen Benutzer zu senden
- ein Sperrmodul (18), das dazu konfiguriert ist, mindestens einen Benutzer zu sperren;
das KI-Modul (12), das dazu konfiguriert ist, die Eingabedaten zu verarbeiten und entsprechend der Eingabe erste Ausgabedaten zu erzeugen;
- ein Informationsgewinnmodul (16), das dazu konfiguriert ist, einen Informationsgewinn zu berechnen und den Informationsgewinnwert an das Sperrmodul (18) zu senden;
ein Sperrbenachrichtigungsmodul (20), das dazu konfiguriert ist, bei Detektieren eines Angriffsvektors eine Benachrichtigung an einen Eigentümer des KI-Systems (10) zu übertragen und die durch das KI-Modul (12) erzeugten ersten Ausgabedaten zu modifizieren;
wobei das KI-System durch Folgendes gekennzeichnet ist ein Submodul (14), das dazu konfiguriert ist, einen Angriffsvektor aus der empfangenen Eingabe zu identifizieren, wobei das Submodul Folgendes umfasst:
ein Berechnungsmodul (141), das dazu konfiguriert ist, mindestens eine momentane Frequenzbereichstransformationssignatur der empfangenen Eingabe abzuleiten;
einen Speicher, der dazu konfiguriert ist, einen Satz von im Voraus abgeleiteten Fourier-Transformationssignaturen zu speichern, wobei der Satz von im Voraus abgeleiteten Frequenzbereichstransformationssignaturen aggregierte Frequenzbereichstransformationssignaturen für bekannte Eingaben umfasst,
die einen Bereich von Nicht-Angriffsvektoren umfassen, wobei die aggregierten Frequenzbereichstransformationssignaturen eine Frequenzvariation über den Bereich von Nicht-Angriffsvektoren darstellen;
ein Komparatormodul (143), das dazu konfiguriert ist, die momentane Frequenzbereichstransformationssignatur mit dem Satz von im Voraus abgeleiteten Frequenzbereichstransformationssignaturen zu vergleichen und einen Angriffsvektor basierend auf dem Vergleich basierend auf einem im Voraus definierten Schwellenwert für den Vergleich zu identifizieren.

2. KI-System (10) nach Anspruch 1, wobei die durch die Ausgabeschnittstelle (22) gesendete Ausgabe die ersten Ausgabedaten umfasst, wenn das Submodul (14) keinen Angriffsvektor aus der empfangenen Eingabe identifiziert.

3. Verfahren (200) zum Trainieren eines Submoduls (14) in einem KI-System (10), wobei das KI-System (10) mindestens ein KI-Modul (12), einen zum Trainieren des KI-Moduls (12) verwendeten Datensatz umfasst, wobei das Verfahren die folgenden Schritte umfasst:
- Berechnen einer Frequenzbereichstransformation auf dem Datensatz, um einen Satz von im Voraus abgeleiteten Frequenzbereichstransformationssignaturen abzuleiten, wobei der Satz von im Voraus abgeleiteten Frequenzbereichstransformationssignaturen aggregierte Frequenzbereichstransformationssignaturen für bekannte Eingaben umfasst, die einen Bereich von Nicht-Angriffsvektoren umfassen, wobei die aggregierten Frequenzbereichstransformationssignaturen Frequenzvariationen über den Bereich von Nicht-Angriffsvektoren darstellen;
- Speichern des Satzes von im Voraus abgeleiteten Frequenzbereichstransformationssignaturen in einem Speicher des Submoduls.

4. Verfahren (300) zum Verhindern einer Erfassung eines KI-Moduls (12) in einem KI-System (10), wobei das Verfahren die folgenden Schritte umfasst:
- Empfangen von Eingabedaten von mindestens einem Benutzer über eine Eingabeschnittstelle (11);
Übertragen von Eingabedaten über ein Sperrmodul (18) an ein KI-Modul (12);
Berechnen von ersten Ausgabedaten durch das KI-Modul (12) basierend auf den Eingabedaten;
Verarbeiten von Eingabedaten durch ein Submodul (14), um einen Angriffsvektor aus den Eingabedaten zu identifizieren, wobei die Identifikationsinformationen des Angriffsvektors an ein Informationsgewinnmodul (16) gesendet werden;
- Übertragen einer Benachrichtigung an einen Eigentümer des KI-Systems (10) bei Identifizieren eines Angriffsvektors und Modifizieren der durch das KI-Modul erzeugten ersten Ausgabedaten;
Senden einer Ausgabe mittels der Ausgabeschnittstelle (22), um ein Erfassen des KI-Moduls (12) zu verhindern, wobei das Verfahren **gekennzeichnet ist durch** Verarbeiten der Eingabedaten durch Folgendes:
- Berechnen einer momentanen Frequenzbereichstransformationssignatur der empfangenen Eingabe;
- Vergleichen der momentanen Frequenzbereichstransformationssignatur mit einem Satz von im Voraus abgeleiteten Frequenzbereichstransformationssignaturen, wobei der Satz von im Voraus abgeleiteten Frequenzbereichstransformationssignaturen aggregierte Frequenzbereichstransformationssignaturen für bekannte Eingaben umfasst, die einen Bereich von Nicht-Angriffsvektoren umfassen, wobei die aggregierten Frequenzbereichstransformationssignaturen Frequenzvariationen über den Bereich von Nicht-Angriffsvektoren darstellen;
- Identifizieren eines Angriffsvektors basierend auf dem Vergleich basierend auf einem im Voraus definierten Schwellenwert für den Vergleich.

## Revendications

1. Système d'IA (10) destiné à empêcher la capture d'un module d'IA, le système d'lA comprenant au moins :
- une interface d'entrée (11) configurée pour recevoir une entrée d'au moins un utilisateur et une interface de sortie (22) pour envoyer une sortie audit au moins un utilisateur
- un module de bloqueur (18) configuré pour bloquer au moins un utilisateur ; le module d'lA (12) étant configuré pour traiter lesdites données d'entrée et générer des premières données de sortie correspondant à ladite entrée ;
- un module de gain d'informations (16) configuré pour calculer un gain d'informations et envoyer la valeur de gain d'informations au module de bloqueur (18) ;
un module de notification de bloqueur (20) configuré pour transmettre une notification à un propriétaire dudit système d'lA (10) lors de la détection d'un vecteur d'attaque et pour modifier les premières données de sortie générées par le module d'lA (12) ;
le système d'lA étant **caractérisé par**
un sous-module (14) configuré pour identifier un vecteur d'attaque à partir de l'entrée reçue, le sous-module comprenant :
un module de calcul (141) configuré pour dériver au moins une signature instantanée de transformation dans le domaine fréquentiel de l'entrée reçue ;
une mémoire configurée pour stocker un ensemble de signatures de transformation de Fourier préalablement dérivées, l'ensemble de signatures de transformation dans le domaine fréquentiel préalablement dérivées comprenant des signatures de transformation dans le domaine fréquentiel agrégées pour des entrées connues comprenant une plage de vecteurs de non-attaque, lesdites signatures de transformation dans le domaine fréquentiel agrégées représentant la variation de fréquence sur la plage de vecteurs de non-attaque ;
un module de comparateur (143) est configuré pour comparer la signature instantanée de transformation dans le domaine fréquentiel avec l'ensemble de signatures préalablement dérivées de transformation dans le domaine fréquentiel et pour identifier un vecteur d'attaque sur la base de ladite comparaison sur la base d'un seuil prédéfini de comparaison.

2. Système d'IA (10) selon la revendication 1, dans lequel la sortie envoyée par l'interface de sortie (22) comprend les premières données de sortie lorsque le sous-module (14) n'identifie pas de vecteur d'attaque à partir de l'entrée reçue.

3. Procédé (200) d'apprentissage d'un sous-module (14) dans un système d'IA (10), ledit système d'IA (10) comprenant au moins un module d'IA (12), un ensemble de données utilisé pour entraîner le module d'lA (12), ledit procédé comprenant les étapes suivantes :
- calculer une transformation dans le domaine fréquentiel sur l'ensemble de données pour dériver un ensemble de signatures de transformation dans le domaine fréquentiel préalablement dérivées, où l'ensemble de signatures de transformation dans le domaine fréquentiel préalablement dérivées comprend des signatures de transformation dans le domaine fréquentiel agrégées pour des entrées connues comprenant une plage de vecteurs de non-attaque, lesdites signatures de transformation dans le domaine fréquentiel agrégées représentant des variations de fréquence sur la plage de vecteurs de non-attaque ;
- stocker l'ensemble des signatures de transformation dans le domaine fréquentiel préalablement dérivées dans une mémoire du sous-module.

4. Procédé (300) pour empêcher la capture d'un module d'IA (12) dans un système d'lA (10), ledit procédé comprenant les étapes suivantes :
- recevoir des données d'entrée d'au moins un utilisateur par l'intermédiaire d'une interface d'entrée (11) ;
transmettre des données d'entrée à un module d'lA (12) par l'intermédiaire d'un module bloqueur (18) ;
calculer des premières données de sortie par le module d'lA (12) sur la base des données d'entrée ;
traiter des données d'entrée par un sous-module (14) pour identifier un vecteur d'attaque à partir des données d'entrée, les informations d'identification du vecteur d'attaque étant envoyées à un module de gain d'informations (16) ;
- transmettre une notification à un propriétaire dudit système d'lA (10) lors de l'identification d'un vecteur d'attaque et modifier les premières données de sortie générées par le module d'IA ;
envoyer une sortie au moyen de l'interface de sortie (22) pour empêcher la capture du module d'lA (12), le procédé étant **caractérisé par** le traitement des données d'entrée par :
- le calcul d'une signature instantanée de transformation dans le domaine fréquentiel de l'entrée reçue ;
- la comparaison de la signature instantanée de transformation dans le domaine fréquentiel à un ensemble de signatures préalablement dérivées de transformation dans le domaine fréquentiel, où l'ensemble de signatures préalablement dérivées de transformation dans le domaine fréquentiel comprend des signatures agrégées de transformation dans le domaine fréquentiel pour des entrées connues comprenant une plage de vecteurs de non-attaque, lesdites signatures agrégées de transformation dans le domaine fréquentiel représentant des variations de fréquence sur la plage de vecteurs de non-attaque ;
- l'identification d'un vecteur d'attaque sur la base de ladite comparaison basée sur un seuil prédéfini de comparaison.
